# EUROPEAN PATENT APPLICATION

(11) **EP 2 963 705 A1**
(43) Date of publication of application: **06.01.2016**
(21) Application number: 14756796.0
(22) Date of filing: 28.02.2014
(51) Int. Cl.: H01M 4/52, H01M 4/485, H01M 10/052

(54) **CATHODE ACTIVE MATERIAL FOR LITHIUM SECONDARY BATTERY**

(30) Priority: 28.02.2013 KR 20130022293
(71) Applicant: IUCF-HYU (Industry-University Cooperation Foundation Hanyang University), Seoul 133-791 (KR)
(72) Inventor: SUN, Yang-Kook, Seoul 135-280 (KR)
(74) Representative: Simons, Amanda Louise
(86) International application number: PCT/KR2014/001705
(87) International publication number: WO 2014/133370

(57) **Abstract**

The present invention relates to cathode active material for a lithium secondary battery, and more specifically to cathode active material for a lithium secondary battery in which the concentration of the transition metal changes gradually in accordance with particle growth, thus changing the oxidation number of the transition metal and improving the stability of the crystalline structure, and thereby notably improving the high-rate charging and discharging characteristics.

## Description

### [Technical Field]

The present invention relates to a cathode active material for a lithium secondary battery, and in particular, to a cathode active material for a lithium secondary battery in which the concentration of the transition metal changes gradually in accordance with particle growth, thus changing the oxidation number of the transition metal and improving the stability of the crystalline structure, and thereby notably improving the high-rate charging and discharging characteristics.

### [Background Art]

Technological development and increased demand for mobile equipment have led to a rapid increase in the demand for secondary batteries as energy sources. Among these secondary batteries, lithium secondary batteries having high energy density and voltage, long cycle span and low self-discharge are commercially available and widely used.

The lithium secondary batteries generally use lithium-containing cobalt composite oxide (LiCoO₂) as a cathode active material. Also, lithium-containing manganese composite oxides (e.g., LiMnO₂ having a layered crystal structure and LiMn₂O₄ having a spinel crystal structure) and lithium-containing nickel composite oxide (e.g., LiNiO₂) have been considered as the cathode active material.

Among these cathode active materials, LiCoO₂ is the most generally used owing to its superior physical properties such as long lifespan and good charge/discharge characteristics, but has low structural stability and is costly due to natural resource limitations of cobalt used as a source material, thus disadvantageously having limited price competiveness.

Lithium manganese oxides such as LiMnO₂ and LiMn₂O₄ have advantages of superior thermal stability and low costs, but have disadvantages of low capacity and bad low-temperature characteristics.

In addition, LiMnO₂-based cathode active materials are relatively cheap and exhibit battery characteristics of superior discharge capacity, but are disadvantageously difficult to synthesize and are unstable.

To solve the afore-mentioned problems, the present invention provides a low-cost highly functional cathode active material including lithium transition metal composite oxide, in which constituent elements are contained to have a predetermined composition and oxidation number, as mentioned below.

In this regard, U.S. Pat. No. 6,964,828 discloses a lithium transition metal oxide having a structure of Li(M1₍₁₋ₓ₎-Mnₓ)O₂, where M1 is a metal other than Cr and, when M1 is Ni or Co, Ni has an oxidation number of +2, Co has an oxidation number of +3, and Mn has an oxidation number of +4.

In addition, Korean Patent Laid-open No. 2005-0047291 discloses a lithium transition metal oxide, where Ni and Mn are present in equivalents amounts and have an oxidation number of +2 and +4, respectively.

As another example, Korean Patent No. 543,720 discloses a lithium transition metal oxide, where Ni and Mn are present in substantially equivalent amounts, Ni has an oxidation number ranging from 2.0 to 2.5 and Mn has an oxidation number ranging from 3.5 to 4.0. This patent discloses that Ni and Mn should substantially have oxidation numbers of +2 and +4, respectively, and shows through comparison between example embodiments and comparative embodiments that the lithium batteries have deteriorated properties, unless Ni and Mn have the oxidation numbers of +2 and +4, respectively.

Also, Japanese Patent Application Publication No. 2001-0083610 discloses a lithium transition metal oxide which is represented by a chemical formula of Li((Li(Ni_{1/2}Mn_{1/2})₍₁₋ₙ)O₂ or Li((Liₓ(Ni_{y}Mn_{y}Co_{P})₍₁₋ₓ₎)O₂ and contains Ni and Mn in equivalent amounts. According to the application, when Ni and Mn are present in identical amounts, Ni and Mn form Ni²⁺ and Mn⁴⁺, respectively, realizing structural stability and thus providing the desired layered structure.

According to the related arts described above, the average oxidation number of transition metals should be +3, and an example of such transition metals is disclosed in U.S. Pat. No. 7,314,682.

However, there has not been a study on a structure, in which an oxidation number of the conventional transition metal is continuously changed from a center of a particle to a surface of the particle.

### [Disclosure]

### [Technical Problem]

Example embodiments of the inventive concept provide a new structure of a cathode active material for a lithium secondary battery. According to the new structure of the cathode active material, a nickel-containing transition metal is provided to have a controlled oxidation number, allowing for a uniform and stable layered structure.

### [Technical Solution]

According to example embodiments of the inventive concept, a cathode active material for a lithium secondary battery may be provided. The cathode active material may contain a nickel-containing lithium transition metal oxide, in which nickel consists of Ni²⁺ and Ni³⁺, and in which an oxidation number represented by the following equation has a continuously-increasing gradient in a direction from a center of a particle to a surface of the particle.

m(Ni²⁺) / {m(Ni²⁺)+m(Ni³⁺)}

m(Ni³⁺) / {m(Ni²⁺)+m(Ni³⁺)}

In example embodiments, the nickel-containing lithium transition metal oxide may include a core portion, whose composition is represented by Chemical Formula 1, and a surface portion, whose composition is represented by Chemical Formula 2.

[Chemical Formula 1] Liₐ₁M1ₓ₁M2_{y1}M3_{z1}M4_{w}O_{2+δ}

[Chemical Formula 2] Liₐ₂M1ₓ₂M2_{y2}M3_{z2}M4_{w}O_{2+δ}

where a concentration of at least one of M1, M2 and M3 have a continuously-varying concentration gradient, from the core portion to the surface portion.

Further, in the Chemical Formulas 1 and 2, M1, M2, and M3 are selected from the group consisting of Ni, Co, Mn, and a combination thereof, M4 is selected from the group consisting of Fe, Na, Mg, Ca, Ti, V, Cr, Cu, Zn, Ge, Sr, Ag, Ba, Zr, Nb, Mo, Al, Ga, B, and a combination thereof, 0<a1≤1.1, 0<a2≤1.1, 0≤x1≤1, 0≤x2≤1, 0≤y1≤1, 0≤y2≤1, 0≤z1≤1, 0≤z2≤1, 0≤w≤0.1, 0.0≤δ≤0.02, 0<x1+y1+z1≤1, 0<x2+y2+z2≤1, x1≤x2, y1≤y2, and z2≤z1.

In example embodiments, the core portion may be the innermost portion of the particle with a radius of 0.2 µm or less, and the surface portion may be the outermost portion of the particle with a thickness of 0.2 µm or less.

In example embodiments, the core portion may have a thickness ranging from 10% to 70 % of a total size of the particle, and the surface portion may have a thickness ranging from 1% to 5 % of the total size of the particle.

In example embodiments, an average oxidation number of the nickel may range from 2.0 to 2.8.

### [Advantageous Effects]

In the case of the cathode active material for a lithium secondary battery according to example embodiments of the inventive concept, a particle is grown in such a way that a concentration of its transition metal are gradually changed and an oxidation number of its transition metal are changed. This makes it possible to improve perfectness in crystal structure of the particle and thereby to realize a highly-efficient charge/discharge property of the secondary battery.

### [Description of Drawings]

FIGS. 1 through 2 are graphs illustrating XPS curves according to example embodiments of the inventive concept.
FIG. 3 is a graph illustrating capacity characteristics of a battery, in which a compound according to example embodiments of the inventive concept is contained.

### [Best Mode]

Hereinafter, the inventive concept will be described in more detail with reference to example embodiments. However, the inventive concept is not limited to the following example embodiments.

### <EMBODIMENT 1>

Firstly, to fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 60:0:40, and to have a concentration of 2.4M, and the latter contained nickel sulfate, cobalt sulfate, and manganese sulfate mixed to have a mole ratio of about 40:20:40.

Distilled water of 4 liters was provided in a co-precipitation reactor (capacity: 4L, power output of rotary motor: 80W), nitrogen gas was supplied into the reactor at a rate of 0.5 liter/minute to remove dissolved oxygen from the distilled water, and the distilled water was stirred at a speed of 1000 rpm, while maintaining the temperature of the reactor at 50°C.

The aqueous metal salt solution for forming the core portion and the aqueous metal salt solution for forming the surface portion were mixed to each other at a predetermined ratio and were provided to the reactor at a rate of 0.3 liter/hour. Also, an ammonia solution (with a concentration of 3.6 M) was continuously provided into the reactor at a rate of 0.03 liter/hour. In addition, an aqueous NaOH solution (having a concentration of 4.8M) was supplied into the reactor to maintain the pH value of 11. Thereafter, the reactor was controlled to have an impeller speed of 1000 rpm, and the solution was dried for 15 hours in a warm air dryer to obtain an active material precursor.

LiNO₃ serving as the lithium salt was added into the active material precursor obtained, and the resulting material was heated at a heating rate of 2°C/min, was preserved for 10 hours at a temperature of 280°C as a preliminary burning process, and was preserved for 15 hours at a temperature of 750°C to finally obtain particles of the active material.

### <EMBODIMENT 2>

To fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 70:30:0, and the latter was prepared to contain nickel sulfate, cobalt sulfate, and manganese sulfate, which were mixed to have a mole ratio of about 40:30:30. Except for the above difference, the active material according to the present embodiment was fabricated in the same manner as that of the embodiment 1.

### <EMBODIMENT 3>

To fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 50:30:20, and the latter was prepared to contain nickel sulfate, cobalt sulfate, and manganese sulfate, which were mixed to have a mole ratio of about 50:20:30. Except for the above difference, the active material according to the present embodiment was fabricated in the same manner as that of the embodiment 1.

### <EMBODIMENT 4>

To fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 70:0:30, and the latter was prepared to contain nickel sulfate, cobalt sulfate, and manganese sulfate, which were mixed to have a mole ratio of about 50:20:30. Except for the above difference, the active material according to the present embodiment was fabricated in the same manner as that of the embodiment 1.

### <EMBODIMENT 5>

To fabricate an active material, in which metal ion had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 70:15:15, and the latter was prepared to contain nickel sulfate, cobalt sulfate, and manganese sulfate, which were mixed to have a mole ratio of about 50:20:30. Except for the above difference, the active material according to the present embodiment was fabricated in the same manner as that of the embodiment 1.

### <EMBODIMENT 6>

To fabricate an active material, in which metal ion had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 80:10:10, and the latter was prepared to contain nickel sulfate, cobalt sulfate, and manganese sulfate, which were mixed to have a mole ratio of about 50:20:30. Except for the above difference, the active material according to the present embodiment was fabricated in the same manner as that of the embodiment 1.

### <EMBODIMENT 7>

To fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 75:0:25, and the latter was prepared to contain nickel sulfate, cobalt sulfate, and manganese sulfate, which were mixed to have a mole ratio of about 55:20:25. Except for the above difference, the active material according to the present embodiment was fabricated in the same manner as that of the embodiment 1.

### <EMBODIMENT 8>

To fabricate an active material including a core portion having a uniform metal concentration and a shell portion having a varying (or gradient) concentration, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 70:10:20, and to form the core portion, and the latter was prepared to contain nickel sulfate, cobalt sulfate, and manganese sulfate, which were mixed to have a mole ratio of about 50:20:30. Except for the above difference, the active material according to the present embodiment was fabricated in the same manner as that of the embodiment 1.

### <EMBODIMENT 9>

To fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 80:0:20, and the latter was prepared to contain nickel sulfate, cobalt sulfate, and manganese sulfate, which were mixed to have a mole ratio of about 60:20:20. Except for the above difference, the active material according to the present embodiment was fabricated in the same manner as that of the embodiment 1.

### <EMBODIMENT 10>

To fabricate an active material including a core portion having a uniform metal concentration and a shell portion having a varying (or gradient) concentration, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 80:10:10, and to form the core portion, and the latter was prepared to contain nickel sulfate, cobalt sulfate, and manganese sulfate, which were mixed to have a mole ratio of about 40:25:35. Except for the above difference, the active material according to the present embodiment was fabricated in the same manner as that of the embodiment 1.

### <EMBODIMENT 11>

To fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 85:15:0, and the latter was prepared to contain nickel sulfate, cobalt sulfate, and manganese sulfate, which were mixed to have a mole ratio of about 60:15:25. Except for the above difference, the active material according to the present embodiment was fabricated in the same manner as that of the embodiment 1.

### <EMBODIMENT 12>

To fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 90:5:5, and the latter was prepared to contain nickel sulfate, cobalt sulfate, and manganese sulfate, which were mixed to have a mole ratio of about 70:5:25. Except for the above difference, the active material according to the present embodiment was fabricated in the same manner as that of the embodiment 1.

### <EMBODIMENT 13>

To fabricate an active material, in which metal ion had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 95:0:5, and the latter was prepared to contain nickel sulfate, cobalt sulfate, and manganese sulfate, which were mixed to have a mole ratio of about 78:6:16. Except for the above difference, the active material according to the present embodiment was fabricated in the same manner as that of the embodiment 1.

### <EMBODIMENT 14>

To fabricate an active material, in which one metal had a uniform concentration and the other metal had a varying (or gradient) concentration over the entire region of a particle, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 80:20:0, and the latter was prepared to contain nickel sulfate, cobalt sulfate, and manganese sulfate, which were mixed to have a mole ratio of about 80:1:19. Except for the above difference, the active material according to the present embodiment was fabricated in the same manner as that of the embodiment 1.

### <EMBODIMENT 15>

To fabricate an active material with two gradients in metal concentration, an aqueous metal salt solution for forming a core portion, an aqueous metal salt solution for forming a first surface portion, and an aqueous metal salt solution for forming a second surface portion were respectively prepared; the first was prepared to contain nickel sulfate, cobalt sulfate, and manganese sulfate, which were mixed to have a mole ratio of about 98:0:2, the second was prepared to contain nickel sulfate, cobalt sulfate, and manganese sulfate, which were mixed to have a mole ratio of about 85:3:12, and the third was prepared to contain nickel sulfate, cobalt sulfate, and manganese sulfate, which were mixed to have a mole ratio of about 70:8:22. Except for the above difference, the active material according to the present embodiment was fabricated in the same manner as that of the embodiment 1.

### <EMBODIMENT 16>

To fabricate an active material including a core portion having a uniform metal concentration and a shell portion having a varying (or gradient) concentration, an aqueous metal salt solution for forming a core portion and an aqueous metal salt solution for forming a surface portion were respectively prepared; the former was prepared to contain nickel sulfate, cobalt sulfate, and manganese sulfate, which were mixed to have a mole ratio of about 95:0:5, and to form the core portion, and the latter was prepared to contain nickel sulfate, cobalt sulfate, and manganese sulfate, which were mixed to have a mole ratio of about 58:13:29. Except for the above difference, the active material according to the present embodiment was fabricated in the same manner as that of the embodiment 1.

### <EMBODIMENT 17>

To fabricate an active material with two gradients in metal concentration, an aqueous metal salt solution for forming a core portion, an aqueous metal salt solution for forming a first surface portion, and an aqueous metal salt solution for forming a second surface portion were respectively prepared; the first was prepared to contain nickel sulfate, cobalt sulfate, and manganese sulfate, which were mixed to have a mole ratio of about 98:0:2, the second was prepared to contain nickel sulfate, cobalt sulfate, and manganese sulfate, which were mixed to have a mole ratio of about 90:3:7, and the third was prepared to contain nickel sulfate, cobalt sulfate, and manganese sulfate, which were mixed to have a mole ratio of about 70:5:25. Except for the above difference, the active material according to the present embodiment was fabricated in the same manner as that of the embodiment 1.

### <COMPARATIVE EXAMPLES 1 TO 12>

Particles made of active materials were fabricated using metal aqueous solutions containing nickel sulfate, cobalt sulfate, and manganese sulfate, which were contained at mole ratios of the following Table 1. Each of the particles was fabricated to include a transition metal, whose concentration was uniform over the entire region of the particle.

**Table 1**

| | Ni | Co | Mn | |
|---|---|---|---|---|
| Comparative Example 1 | 44 | 16 | 40 | Average composition of Embodiment 1 |
| Comparative Example 2 | 45 | 30 | 25 | Average composition of Embodiment 2 |
| Comparative Example 3 | 50 | 22 | 28 | Average composition of Embodiment 3 |
| Comparative Example 4 | 54 | 16 | 30 | Average composition of Embodiment 4 |
| Comparative Example 5 | 55 | 19 | 26 | Average composition of Embodiment 5 |
| Comparative Example 6 | 58 | 17 | 25 | Average composition of Embodiment 6 |
| Comparative Example 7 | 60 | 15 | 25 | Average composition of Embodiments 7, 8 |
| Comparative Example 8 | 64 | 16 | 20 | Average composition of Embodiments 9, 10 |
| Comparative Example 9 | 64 | 15 | 21 | Average composition of Embodiment 11 |
| Comparative Example 10 | 74 | 5 | 21 | Average composition of Embodiment 12 |
| Comparative Example 11 | 80 | 5 | 15 | Average composition of Embodiments 13, 14, 15, 16 |
| Comparative Example 12 | 85 | 4 | 11 | Average composition of Embodiment 17 |

### <Experimental Example> Measurement of Average Oxidation Number

XPS of each of active materials, which were fabricated according to the embodiments 1 to 17 and the comparative examples 1 to 12, was measured to calculate mole numbers of Ni²⁺ and Ni³⁺, and the following Table 2 showed the result.

**Table 2**

| | Capacity (mAh/g) | Ni Average Oxidation Number | Ni²⁺ (mol) | Ni³⁺ (mol) | Mole ratio (Ni³⁺/Ni²⁺) |
|---|---|---|---|---|---|
| Embodiment 1 | 172.2 | 2.0012 | 0.4395 | 0.0005 | 0.0012 |
| Comparative Example 1 | 161.2 | 2.0909 | 0.4000 | 0.0400 | 0.1000 |
| Embodiment 2 | 178.1 | 2.3241 | 0.3042 | 0.1458 | 0.4795 |
| Comparative Example 2 | 163.1 | 2.4444 | 0.2500 | 0.2000 | 0.8000 |
| Embodiment 3 | 184.2 | 2.3628 | 0.3186 | 0.1814 | 0.5695 |
| Comparative Example 3 | 173.5 | 2.4400 | 0.2800 | 0.2200 | 0.7857 |
| Embodiment 4 | 183.7 | 2.3571 | 0.3472 | 0.1928 | 0.5553 |
| Comparative Example 4 | 170.6 | 2.4444 | 0.3000 | 0.2400 | 0.8000 |
| Embodiment 5 | 183.1 | 2.5128 | 0.2679 | 0.2821 | 1.0527 |
| Comparative Example 5 | 180.9 | 2.5273 | 0.2600 | 0.2900 | 1.1154 |
| Embodiment 6 | 186.7 | 2.5186 | 0.2792 | 0.3008 | 1.0771 |
| Comparative Example 6 | 178.6 | 2.5690 | 0.2500 | 0.3300 | 1.3200 |
| Embodiment 7 | 191.1 | 2.5273 | 0.2836 | 0.3164 | 1.1155 |
| Embodiment 8 | 188.9 | 2.5346 | 0.2792 | 0.3208 | 1.1487 |
| Comparative Example 7 | 183.2 | 2.5833 | 0.2500 | 0.3500 | 1.4000 |
| Embodiment 9 | 195.3 | 2.6248 | 0.2401 | 0.3999 | 1.6651 |
| Embodiment 10 | 193.1 | 2.6517 | 0.2229 | 0.4171 | 1.8711 |
| Comparative Example 8 | 184.2 | 2.6875 | 0.2000 | 0.4400 | 2.2000 |
| Embodiment 11 | 193.8 | 2.6227 | 0.2414 | 0.3986 | 1.6507 |
| Comparative Example 9 | 185.1 | 2.6719 | 0.2100 | 0.4300 | 2.0476 |
| Embodiment 12 | 201.2 | 2.6869 | 0.2317 | 0.5083 | 2.1940 |
| Comparative Example 10 | 195.2 | 2.7162 | 0.2100 | 0.5300 | 2.5238 |
| Embodiment 13 | 211.7 | 2.7309 | 0.2153 | 0.5847 | 2.7161 |
| Embodiment 14 | 211.3 | 2.7397 | 0.2082 | 0.5918 | 2.8417 |
| Embodiment 15 | 210.2 | 2.7512 | 0.1990 | 0.6010 | 3.0193 |
| Embodiment 16 | 207.9 | 2.7591 | 0.1927 | 0.6073 | 3.1511 |
| Comparative Example 11 | 200.3 | 2.8125 | 0.1500 | 0.6500 | 4.3333 |
| Embodiment 17 | 218.6 | 2.7608 | 0.1914 | 0.6086 | 3.1806 |
| Comparative Example 12 | 205.7 | 2.8706 | 0.1100 | 0.7400 | 6.7273 |

Table 2 shows that, for the active materials fabricated by the embodiments of the inventive concept, the mole of Ni²⁺ is higher than that of Ni³⁺, when compared to the active materials, whose average compositions are substantially equal to those of the active materials of the embodiments, according to the comparative examples.

### <Experimental Example> XPS measurement according to etching thickness of active material

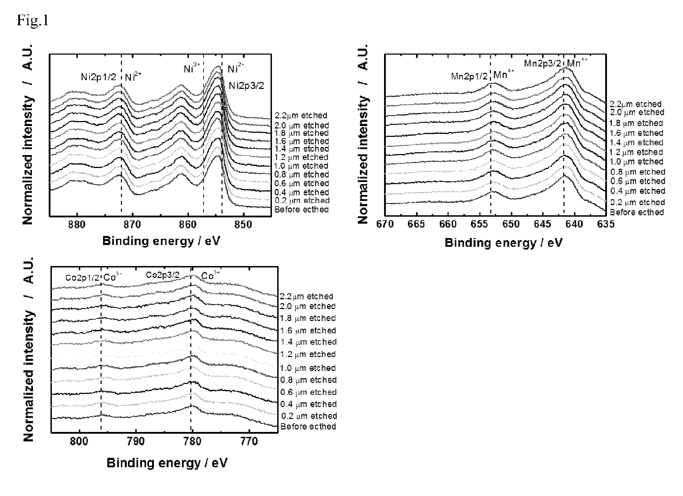

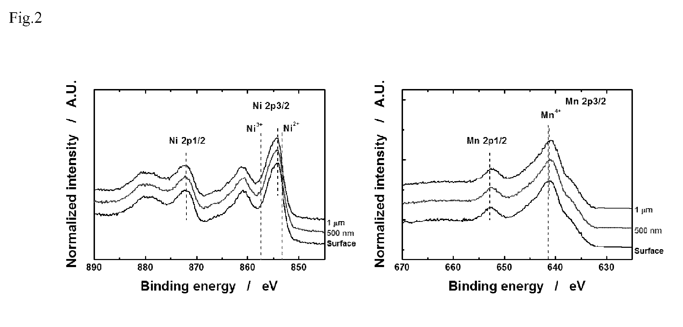

A surface etching process was performed on the active materials fabricated by the embodiments 7 and 14 to have different etching thickness. FIGS. 1 and 2 show XPS curves measured from the resulting structures.

FIGS. 1 through 2 show that, for the active materials fabricated by the embodiments of the inventive concept, a value of m(Ni²⁺) / m(Ni²⁺) + m(Ni³⁺) and a value of m(Ni³⁺) / m(Ni²⁺) + m(Ni³⁺) have a continuously-varying concentration gradient in an internal region of a particle.

### <Fabrication Example of Battery>

Cathode active materials fabricated according to the embodiments 1 to 17 and the comparative examples 1 to 12, a conductive material made of SuperP, and a binder made of polyvinylidene fluoride (PVdF) were mixed to form slurries. In each of the slurries, the cathode active material, the conductive material, and the binder were mixed to have a weight ratio of 85:7.5:7.5. Each of the slurries was coated on an aluminum layer having a thickness of 20 µm, and the resulting structure was dried at a temperature of 120°C and under a vacuum condition to fabricate a cathode. Thereafter, coin cells including such cathodes were fabricated by a conventional fabrication process. For example, the cathode and a lithium foil were used as opposite electrodes of the coin cell, and a porous polyethylene layer (Celgard 2300 having a thickness of 25 µm, made by Celgard LLC) was used as a separator of the coin cell. Furthermore, a liquid electrolyte of the coin cell was prepared to contain solvent, in which ethylene carbonate and ethyl methyl carbonate volume ratio were mixed at a ratio of 3:7, and LiPF₆, which was dissolved to have a concentration of 1.2M.

### <Experimental Example> Measurement of capacity characteristics

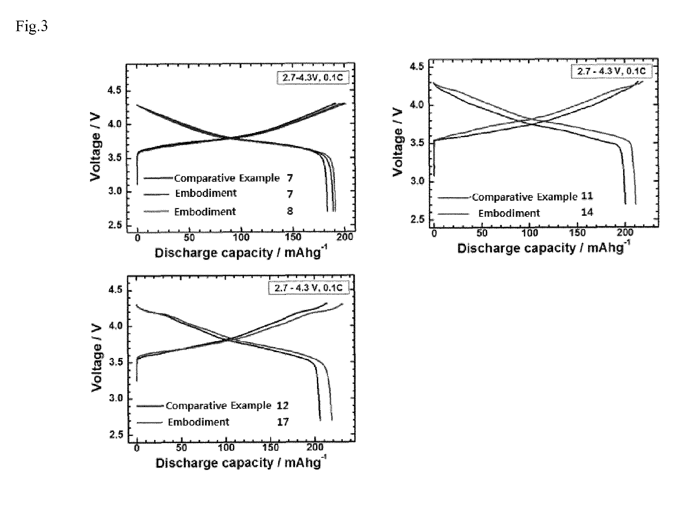

A charge/discharge test was performed on the battery fabricated according to the fabrication example. The charge/discharge test was performed within a voltage range of 2.7 - 4.5 V and under a condition of 0.1C to measure capacity characteristics of the battery, and FIG. 3 and Table 2 show the results obtained in the charge/discharge test.

FIG. 3 and Table 2 show that, if the cathode active materials according to example embodiments of the inventive concept are used for a battery, it is possible to achieve improvement in capacity characteristics of the battery.

### [Industrial Applicability]

In the case of the cathode active material for a lithium secondary battery according to example embodiments of the inventive concept, a particle is grown in such a way that a concentration of its transition metal are gradually changed and an oxidation number of its transition metal are changed. This makes it possible to improve perfectness in crystal structure of the particle and thereby to realize a highly-efficient charge/discharge property of the secondary battery.

## Claims

1. A cathode active material for a lithium secondary battery, wherein the cathode active material contains a nickel-containing lithium transition metal oxide, in which nickel consists of Ni²⁺ and Ni³⁺, and in which an oxidation number represented by the following equation has a continuously-increasing gradient in a direction from a center of a particle to a surface of the particle.
m(Ni²⁺) / {m(Ni²⁺)+ m(Ni³⁺)}
m(Ni³⁺) / {m(Ni²⁺)+ m(Ni³⁺)}

2. The cathode active material of claim 1, wherein the nickel-containing lithium transition metal oxide comprises:
a core portion, whose composition is represented by Chemical Formula 1; and
a surface portion, whose composition is represented by Chemical Formula 2,
[Chemical Formula 1] Liₐ₁M1ₓ₁M2_{y1}M3_{z1}M4_{w}O_{2+δ}
[Chemical Formula 2] Liₐ₂M1ₓ₂M2_{y2}M3_{z2}M4_{w}O_{2+δ}
wherein a concentration of at least one of M1, M2 and M3 have a continuously-varying concentration gradient, from the core portion to the surface portion,
in Chemical Formulas 1 and 2, M1, M2, and M3 are selected from the group consisting of Ni, Co, Mn, and a combination thereof, M4 is selected from the group consisting of Fe, Na, Mg, Ca, Ti, V, Cr, Cu, Zn, Ge, Sr, Ag, Ba, Zr, Nb, Mo, Al, Ga, B, and a combination thereof, 0<a1≤1.1, 0<a2≤1.1, 0≤x1≤1, 0≤x2≤1, 0≤z1≤1, 0≤y2≤1, 0≤z1≤1, 0≤z2≤1, 0≤w≤0.1, 0.0≤δ≤0.02, 0≤x1+y1+z1≤1, 0<x2+y2+z2≤1, x1≤x2, y1≤y2, and z2≤z1.

3. The cathode active material of claim 2, wherein the core portion is the innermost portion of the particle with a radius of 0.2 µm or less, and the surface portion is the outermost portion of the particle with a thickness of 0.2 µm or less.

4. The cathode active material of claim 2, wherein the core portion has a thickness ranging from 10% to 70 % of a total size of the particle, and
the surface portion has a thickness ranging from 1% to 5 % of the total size of the particle.

5. The cathode active material of claim 1, wherein an average oxidation number of the nickel ranges from 2.0 to 2.8.
